Europäisches Patentamt

European Patent Office

Office européen des brevets

(11) Veröffentlichungsnummer: **0 254 754**
**A1**

## (12) EUROPÄISCHE PATENTANMELDUNG

(21) Anmeldenummer: **86110355.4**

(22) Anmeldetag: **26.07.86**

(51) Int. Cl.⁴: **G01L 3/10**

(43) Veröffentlichungstag der Anmeldung:
**03.02.88 Patentblatt 88/05**

(84) Benannte Vertragsstaaten:
**AT BE CH DE FR GB IT LI LU NL SE**

(71) Anmelder: **CARL SCHENCK AG
Landwehrstrasse 55 Postfach 40 18
D-6100 Darmstadt(DE)**

(72) Erfinder: **Storck, Karlheinz, Dr.
Waldstrasse 84
D-6109 Mühltal 2(DE)**

(74) Vertreter: **Dallhammer, Herbert, Dipl.-Ing.
CARL SCHENCK AG Patentabteilung
Postfach 4018 Landwehrstrasse 55
D-6100 Darmstadt(DE)**

(54) Verfahren zur Ermittlung eines Drehmomentes.

(57) Bei einem Verfahren und einer Vorrichtung zur Ermittlung eines auf einen Körper einwirkenden Drehmoments aus der Messung der Torsion eines Bauteils werden zu dem Zweck, unabhängig von der Höhe der zu Meßzwecken eingeleiteten oder bei einer Überwachung zu übertragenden Drehmomente ein einheitliches auf Torsion beanspruchtes Bauteil zur Ermittlung der Drehmomente einzusetzen, auch bei Bruch des Bauteils eine weitere Drehmomentein- leitung oder -übertragung zu gewährleisten sowie gleichzeitig Unempfindlichkeit gegen äußere Kräfte zu erreichen die Momentenübertragung und Mome- ntenmessung voneinander getrennt auf verschiedene Bauteile übertragen.

FIG. 1

EP 0 254 754 A1

## Verfahren zur Ermittlung eines Drehmoments sowie Vorrichtung zur Durchführung des Verfahrens

Die Erfindung betrifft ein Verfahren zur Ermittlung eines Drehmoments eines Bauteils aus der Messung der Torsion des Bauteils sowie eine Vorrichtung zur Durchführung des Verfahrens mit einem auf Torsion beanspruchten Meßelement zur Ermittlung des Drehmoments.

Die Ermittlung von Drehmomenten dient einerseits zur Überwachung von Maschinen wie Walzwerken und zum anderen zur Bestimmung der Leistung von Maschinen z. B. in Motorenprüfständen. Diese breite Palette erfordert zwangsläufig eine Anpassung der Abmessungen der zu tordierenden Bauteile, an die in sie eingeleiteten Drehkräfte und Drehmomente.

Dabei ist es verständlich, daß mit zunehmender Wanddicke des Bauteils dessen Meßempfindlichkeit im Vergleich mit einem dünneren Bauteil sinkt. Soll beispielsweise bei der Ermittlung des Drehmoments an Getriebeprüfständen eine hohe Empfindlichkeit bei der Torsion des Bauteils erreicht werden, so steht dies im Gegensatz zu der hierbei erforderlichen Steife des zu tordierenden Bauteils. Es muß also hier eine Zwischenlagerung des zu tordierenden Bauteils geschaffen werden, was beispielsweise zusätzliche Schwierigkeiten bei anderen Anwendungsfällen, wie in Motorenprüfständen, führt.

Ganz allgemein besitzen als Drehmomentmeßwellen eingesetzte Bauteile, die mittels Verdrillung das Drehmoment oder die Drehkraft einer zu überwachenden oder zu untersuchenden Maschine ermitteln, den Nachteil, daß bei Bruch des tordierten Bauteils die zu überwachende oder zu untersuchende Maschine nicht weiter betrieben werden kann. Fällt bei der Überwachung von Walzgerüsten eine Drehmomentmeßwelle aus, so ist das Walzgerüst nicht mehr antreibbar. Dasselbe gilt auch beim Einsatz von Drehmomentmeßwellen, beispielsweise bei Getriebe-und Motorenprüfständen. Darüber hinaus ist es bei Prüfständen, bei der die Ermittlung des Drehmoments zur Qualifikation des zu untersuchenden Gegenstands dient, erforderlich, daß keine fälschenden Einflüsse, wie beispielsweise Biegebeanspruchungen das ermittelte Drehmoment beeinflussen. Deshalb ist es erforderlich, dort eingesetze Drehmomentmeßwellen zu entkuppeln, was beispielsweise durch zusätzliche Lagerung der Drehmomentmeßwelle geschieht. Diese zusätzliche Lagerung führt zum anderen jedoch zu einer Verfälschung der Torsion des durch das eingeleitete Drehmoment tordierten Bauteils.

Sollen beispielsweise mit einem Prüfstand neben normalerweise geringen Torsionen, wie sie bei normaler Belastung des Getriebes oder des Motors auftreten, auch kurzfristig auftretende Stoßbelastungen gemessen werden, so ist eine hierzu zu verwendende Drehmomentmeßwelle nach dem maximal auftretenden einzuleitenden Drehmoment auszulegen. Dies führt zwangsläufig neben einem beachtlichen finanziellen Aufwand zu einer Drehmomentmeßwelle, die bei den normal zu übertragenden Drehmomenten eine geringere Empfindlichkeit aufweist. Daraus folgt preissteigernd der Einsatz zusätzlicher Anpaßaggregate um das Meßsignal mit der erforderlichen Genauigkeit darzustellen.

Ausgehend hiervon liegt der Erfindung die Aufgabe zugrunde, unabhängig von der Höhe der zu Meßzwecken eingeleiteten oder bei einer Überwachung zu übertragenden Drehmoment ein einheitliches auf Torsion beanspruchtes Bauteil zur Ermittlung der Drehmomente einzusetzen, auch soll bei Bruch des Bauteils eine weitere Drehmomenteinleitung oder -übertragung gewährleistet sein bei gleichzeitiger Unempfindlichkeit gegen äußere Kräfte. Diese Aufgabe wird mit den kennzeichnenden Merkmalen des Anspruchs I gelöst. Durch das Auftrennen des Meßvorgangs in einen Übertragungsvorgang und einen Meßvorgang läßt sich die der Erfindung zugrundeliegende Aufgabe in überraschender Weise lösen.

In den kennzeichnenden Merkmalen des Anspruchs 2 wird eine Vorrichtung zur Durchführung des Verfahrens nach Anspruch I unter Schutz gestellt. Nach Einleiten des Drehmoments in ein torsionssteifes Bauteil wird der Torsionswinkel durch ein Übertragungselement auf das auf Torsion beanspruchte Meßelement übertragen wird, welches eine geringere Torsionssteife besitzt als das genannte torsionssteife Bauteil.

Eine Ausgestaltung dieser erfindungsgemäßen Meßwelle wird in Anspruch 3 unter Schutz gestellt; sie besteht darin, alle Bauteile rohrförmig auszugestalten, also das Bauteil für die Einleitung des Drehmoments als Hauptrohr, das Übertragungselement als Übertragungsrohr und das Meßelement ebenfalls rohrförmig auszubilden. Hierdurch kann das Hauptrohr gleichzeitig als äußeres Hüllrohr für das Koaxial zu diesem angeordnete Ubertragungs-und Meßrohr dienen.

Weitere erfindungsgemäße Ausgestaltungen sind in den Ansprüchen 4 bis I0 unter Schutz gestellt, wobei durch Bemessung der Wanddicken von Hauptrohr zu Übertragungsrohr und Meßrohr eine noch weitere Anpassung der erfindungsgemäßen Vorrichtung an die zu übertragenden oder einzuleitenden Drehmomente ermöglicht wird; eine einstückige Herstellung von Haupt-, Übertragungsrohr und Meßelement unter Schutz gestellt wird, die Dämpfungen vom Hauptrohr zum Übertragungsrohr und vom Übertragungsrohr zum Meßteil völlig vermeidet; daß durch die Anordnung eines radial und/oder axial weichen Verbindungselementes am Meßelement evtl. auftretende Biegebelastungen oder durch Temperatureinflüsse auftretende Dehnungen die Meßergebnisse nicht verfälschen können; daß durch Anordnung eines Kugellagers eine koaxiale Führung zwischen Haupt-, Übertragungs und Meßrohr gewährleistet wird. Anstelle der rohrförmigen Ausgestaltung ist erfindungsgemäß auch eine Anordnung aus einem Hauptrohr als Hüllrohr und einem mit diesem verbundenen Stab als Übertragungsbauteil und einem stabförmigen Meßteil einsetzbar.

Erfindungsgemäß können die einzelnen Bauteile zur Einleitung, zur Übertragung und zur Messung der Drehmomente oder Drehkräfte auch aus verschiedenen Werkstoffen wie Stahl, Aluminium, Kunststoff oder deren Kombinationen hergestellt werden.

Durch die erfindungsgemäße Vorrichtung wird insgesamt eine Meßwelle vorgeschlagen, die bei zumindest gleicher Gesamttorsionssteife und Meßempfindlichkeit größere Längen zwischen Antrieb und zu überwachendem bzw. zu untersuchendem Bauteil zu überbrücken gestattet, als dies mit bekannten Ausführungen möglich ist; eine gegen äußere Kräfte (Biegung, Längskräfte, Beschleunigungen) unempfindliche Meßwelle vorgeschlagen; eine Meßwelle vorgeschlagen, die nicht zwischen Gelenkkupplungen (Balg-oder Bogenzahnkupplungen, Kreuzgelenke) aufgehängt werden muß und für die sich Zwischenlagerungen erübrigen; eine Meßwelle vorgeschlagen, bei der Temperaturänderungen nicht zu störenden Belastungsänderungen am Meßelement führen; eine Bauform vorgeschlagen, bei der baugleiche Meßelemente für Meßwellen mit beliebigen Nennbelastbarkeiten eingesetzt werden können; eine Meßwelle vorgeschlagen, die mit Ausnahme des Meßelements aus kostengünstigen Werkstoffen hergestellt werden kann.

Durch die Anordnung unterschiedlicher Bauteile für die Torsionsübertragung und Torsionsmessung kann die Ver lierung des Meßelements von störenden Belastungen sowie eine Unabhängigkeit des Meßelements von dem zu übertragenden Drehmoment erreicht werden.

Durch den erfindungsgemäßen wesentlichen Längenunterschied zwischen dem durch das eingeleitete Drehmoment verdrillten Außenrohr und dem wesentlich kürzeren Meßrohr bei einer Rohrausführung der Meßwelle tritt eine Übersetzung der Beanspruchung auf, die in weiten Grenzen zwischen der Länge der Gesamtwelle und der kürzest möglichen Ausführung des Meßelements frei wählbar ist. Damit wird erfindungsgemäß auch bei geringer Verdrillung des Außenrohrs bei einer steifen Ausführung ein ausreichend großes Signal am Meßelement und damit eine genügende Empfindlichkeit erreicht.

In der nachfolgenden Zeichnung wird die Erfindung an einem Ausführungsbeispiel, einer Rohranordnung näher erläutert; gleiches gilt auch für eine Rohr-und Massivanordnung.

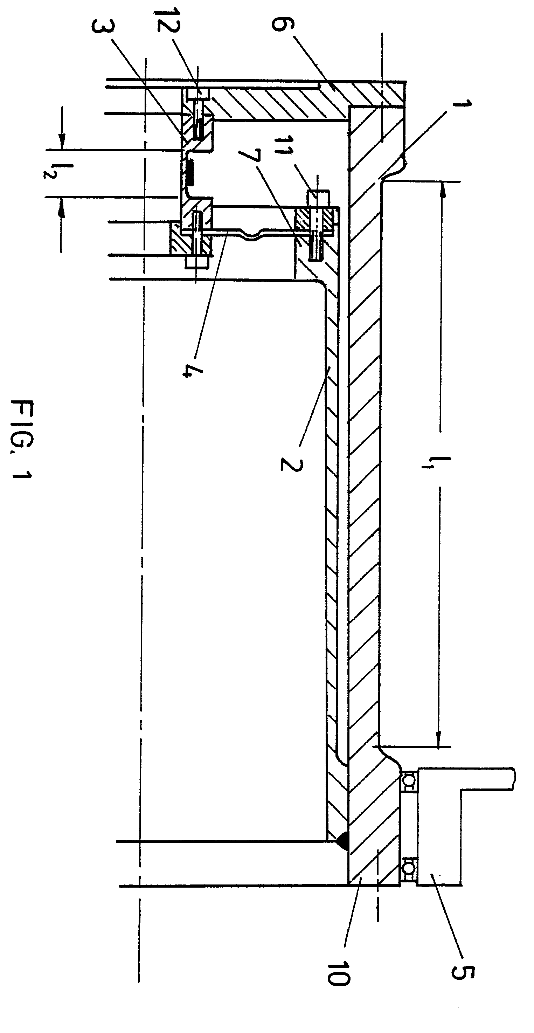

Die in der Figur dargestellte Meßwelle zur Ermittlung des Drehmoments von Bauteilen besteht im Wesentlichen aus drei Teilen, einem Hauptrohr 1 zur Momentenübertragung, einem Übertragungsrohr 2 zur Verdrillungsübertragung und einem Meßelement 3, welches aus der Verdrillung des Übertragungsrohrs 2 gegen einen Hauptrohrflansch 6 das auftretende Drehmoment ermittelt.

Am Hauptrohr 1 ist eine Signalübertragungseinrichtung 5 vorgesehen, beispielsweise ein Schleifringsatz oder ein Trägerfrequenzübertragungsmittel zur elektrischen Weitergabe für eine Anzeige oder Weiterverwertung bei einem Meßvorgang ermittelter Meßwerte. Bei Einsatz der vorgeschlagenen Meßwelle als Überwachungselement können die auftretenden Spannungswerte umgewandelt eine Signaleinrichtung bei Erreichen der Grenzbelastung betätigen oder das überwachte Maschinenteil abschalten.

Durch Trennung der Momentenübertragung und der Momentenmessung voneinander auf verschiedene Bauteile ist es auch möglich, bei Ausfall des Meßelements 3 das Drehmoment als Antriebsmoment weiter über das Hauptrohr 1 zu leiten. Beispielsweise kann hiermit auch bei Ausfall des Meßelements 3 bei einer Überwachung von Walzwerksständern solange der einzelne Ständer weiter betrieben werden, bis bei einer sowieso auftretenden Pause das Meßelement 3 durch ein neues Meßelement ersetzt werden kann. Gleiches gilt auch bei der Untersuchung von Motoren und Getrieben. Wenn durch Überlast, beispielsweise das Meßelement 3 zerstört wird, ist die Sicherheit gegeben, das zu untersuchende Getriebe oder den zu untersuchenden Motor gezielt abzubremsen, was bisher ebenfalls nicht möglich war.

Der Hauptrohrflansch 6 ist beispielsweise mit einer nicht dargestellten Antriebsmaschine verbunden, während das freie Ende 10 des Hauptrohres 1 mit dem zu untersuchenden Bauteil verbunden ist. Durch die Einleitung von Drehkräften oder Drehmomenten z. B. von der Seite des Hauptrohrflansches 6 ausgehend, wird das Hauptrohr 1 verdrillt. Entsprechend der Länge L1 des Hauptrohrs 1 wird eine Verdrillung des freien Endes 10 des Hauptrohrs 1 gegenüber dem Hauptrohrflansch 6 erreicht, die abhängig von der Dimensionierung des Hauptrohres I gegenüber den auftretenden Drehmomenten ist, die im wesentlichen unabhängig ist von den von außen her einwirkenden Kräften wie Biegekräfte, Längskräfte, und Kräften durch Temperatureinflüsse.

Am inneren Umfang des Hauptrohrs I im Bereich des freien Endes des Hauptrohres I ist gemäß Ausführungsbeispiel das Übertragungsrohr 2 angeschweißt, welches der Übertragung der Verdrillung dient. Das Übertragungsrohr 2 ist zurückgeführt in Richtung auf den Hauptrohrflansch und mit seinem Ende über eine Schraubverbindung II und eine torsionssteife Membran 4 mit dem Meßelement 3, welches im Ausführungsbeispiel als Meßrohr ausgebildet ist, verschraubt. Das Meßelement 3 ist über eine weitere Schraubverbindung I2 mit dem Hauptrohrflansch fest verbunden. Das Meßelement 3 besitzt eine Meßlänge L2, die wesentlich kürzer ist als die Verdrillungslänge LI des Hauptrohrs I.

Die Funktionsweise der erfindungsgemäßen Welle ist folgende: Wird das Hauptrohr I um seine Längsachse mit einem Drehmoment beaufschlagt, werden seine Mantellinien mit dem Winkel $\alpha$ ausgelenkt. Die Verdrillung am Rohrende I0 beträgt S $= LI \times \alpha = R \times \varphi$ für den Fall konstanter Rohrdicke des Hauptrohres I.

Durch das mit dem freien Ende I0 des Hauptrohrs I verbundene Übertragungsrohr 2 wird die Verdrillung zum anderen Ende hin übertragen. Der Winkel $\varphi$ tritt zwischen Hauptrohrflansch 6 und freiem Innenrohrflansch 7 auf.

Die Meßlänge des zwischen diesen Flanschen angebrachten Meßelements 3 z. B. einem Rohrmeßelement ist wesentlich kürzer (L2) als die Länge LI des Hauptrohres I zwischen den Einspannstellen Hauptrohrflansch 6 und freiem Ende I0. Daraus folgt, daß die Mantellinien des Meßelements 3 mit einem entsprechend größeren Winkel $\beta$ verschränkt werden. Ist nun erfindungsgemäß die Torsionssteifigkeit des Übertragungsrohrs 2 groß gegenüber der Steifigkeit des Meßelements 3, so ist $\beta$ nahezu gleich LI zu L2 $\times \alpha$.

Da $\beta$ bzw. $\alpha$ das Maß für die Schubspannungen an der Rohroberfläche sind, ist die Empfindlichkeit einer mit $\beta$ verformten, auf dem Meßelement 3 befindlichen Dehnmeßstreifenrosette um den Faktor LI zu L2 größer als bei Verformung mit $\alpha$. Daraus folgt, daß sich die Werkstoffbeanspruchung von Hauptrohr I zu Meßelement 3 etwa wie L2 zu LI verhält.

Werkstoffbeanspruchung von Hauptrohr I zu Meßelement 3 etwa wie L2 zu LI verhält.

Durch die erfindungsgemäße Auswahl der Steifigkeit von Hauptrohr I und Übertragungsrohr 2 groß gegenüber der Steifigkeit des Meßelements 3, wird es ermöglicht, daß beispielsweise auch Rohre aus hochwertigen Werkstoffen, z. B. Titan, als Meßelement 3 auf die beispielsweise Dehnmeßstreifen appliziert sind oder die mit Piezo-Kristallen oder optoelektronischen Elementen zur Bestimmung der Verdrillung zusammenwirken, verwendet werden können.

Entsprechend der Werkstoffbeanspruchung von Hauptrohr I zu Meßelement 3 z. B. als Meßrohr etwa wie L2 zu LI kann man von einer Übersetzung der Beanspruchung sprechen, die in weiten Grenzen - zwischen Länge der Gesamtwelle und kürzest möglicher Ausführung des Meßelements 3 - frei wählbar ist. Die vom Hauptrohr I übertragenen Drehmomente sind daher im wesentlichen unabhängig von der Größe des Meßelements 2.

Die Steifigkeit der Welle ist bestimmt durch die Verdrillung in Abhängigkeit vom Belastungsmoment. Da durch das Längenverhältnis LI zu L2 eine vergrößerte Übertragung der Verdrillung auf das Meßelement 3 möglich ist, kann auch bei geringer Verdrillung des Hauptrohrs I (steife Ausführung) ein ausreichend großes Signal am Meßelement 3 und damit genügende Empfindlichkeit erreicht werden.

Das Meßelement 3 ist auf einer Seite mit einer radial-und axialweichen Membran 4 von Einflüssen durch Biegung und Längenänderung isoliert.

**Ansprüche**

I. Verfahren zur Ermittlung eines auf einen Körper einwirkenden Drehmoments aus der Messung der Torsion eines Bauteils, dadurch gekennzeichnet, daß durch ein eingeleitetes Drehmoment ein erstes Bauteil tordiert wird, diese Torsion von einem zweiten Bauteil übertragen wird und daß die Torsion durch ein drittes Bauteil gemessen wird.

2. Vorrichtung zur Durchführung des Verfahrens mit einem auf Torsion beanspruchten Meßelement zur Ermittlung des auf einen Körper einwirkenden Drehmoments, dadurch gekennzeichnet, daß das Drehmoment in ein torsionssteifes Bauteil (I) eingeleitet wird, das an einem Ende (I0) mit einem Übertragungselement (2) verbunden ist, zwischen dessen freiem Ende (7) und dem freien Ende (6) des torsionssteifen Bauteils (I), das auf Torsion beanspruchte Meßelement (3) angeordnet ist und daß die Torsionssteife des torsionssteifen Bauteils (I) und des Übertragungselements (2) größer als die des Meßelements (3) ist.

3. Vorrichtung nach Anspruch 2, dadurch gekennzeichnet, daß das torsionssteife Bauteil als Hauptrohr (I) das Übertragungselement als Übertragungsrohr (2) und das Meßelement (3) rohrförmig ausgebildet sind.

4. Vorrichtung nach Anspruch 3, dadurch gekennzeichnet, daß die Wanddicken von Hauptrohr und Übertragungsrohr (2) unterschiedlich sind.

5. Vorrichtung nach Anspruch 3, dadurch gekennzeichnet, daß die Wanddicken von Übertragungsrohr (2) und Meßelement (3) unterschiedlich dick sind.

6. Vorrichtung nach Anspruch 3, dadurch gekennzeichnet, daß Hauptrohr (I), Übertragungsrohr (2) und Meßelement (3) einstückig hergestellt sind.

7. Vorrichtung nach Anspruch 2 oder 3, dadurch gekennzeichnet, daß das Meßelement (3) an einem Ende ein torsionssteifes, jedoch radial weiches Verbindungselement (4) trägt.

8. Vorrichtung nach Anspruch 2 oder Anspruch 3, dadurch gekennzeichnet, daß an mindestens einem Ende des Meßelements (3) ein torsionssteifes, jedoch in axialer Richtung weiches Verbindungselement (4) angeordnet ist.

9. Vorrichtung nach Anspruch 2 oder Anspruch 3, dadurch gekennzeichnet, daß das Übertragungsrohr (2) im Hauptrohr (I) im Bereich des Meßelements (3) über ein Kugellager abgestützt ist.

I0. Vorrichtung nach Anspruch 2, dadurch gekennzeichnet, daß Übertragungselement (2) und/oder Meßelement (3) massiv ausgeführt sind.

FIG. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 120 754 (PHILIPS PATENTVERWALTUNG GmbH) * Insgesamt * | 1-5 | G 01 L 3/10 |
| | --- | | |
| X | US-A-3 800 591 (R.S. TVETER) * Insgesamt * | 1-8,10 | |
| | ----- | | |

|  |
|---|
| RECHERCHIERTE SACHGEBIETE (Int. Cl.4) |
| G 01 L 3 |

Der vorliegende Recherchenbericht wurde für alle Patentansprüche erstellt.

| Recherchenort | Abschlußdatum der Recherche | Prüfer |
|---|---|---|
| DEN HAAG | 19-03-1987 | VAN ASSCHE P.O. |

EPA Form 1503 03 82

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument